# EUROPÄISCHE PATENTSCHRIFT

(11) **EP 2 771 422 B1**
(45) Veröffentlichungstag und Bekanntmachung des Hinweises auf die Patenterteilung: **13.09.2017**
(21) Anmeldenummer: 12780478.9
(22) Anmeldetag: 26.10.2012
(51) Int. Cl.: C09J 153/02, C09J 7/02, C08L 35/06, C08L 57/02

(54) **HAFTKLEBEMASSE MIT ERHÖHTER TEMPERATURSTABILITÄT UND VERWENDUNG DERSELBEN FÜR EIN KLEBEBAND**
ADHESIVE PASTE WITH INCREASED TEMPERATURE STABILITY AND USE THEREOF FOR AN ADHESIVE TAPE
MATIÈRE AUTO-ADHÉSIVE PRÉSENTANT UNE STABILITÉ THERMIQUE AMÉLIORÉE ET UTILISATION DE LADITE MATIÈRE POUR UNE BANDE ADHÉSIVE

(30) Priorität: 27.10.2011 DE 102011085354
(43) Veröffentlichungstag der Anmeldung: 03.09.2014
(73) Patentinhaber: tesa SE, 22848 Norderstedt (DE)
(72) Erfinder: KRAWINKEL, Thorsten, 22457 Hamburg (DE)
(86) Internationale Anmeldenummer: PCT/EP2012/071198
(87) Internationale Veröffentlichungsnummer: WO 2013/060806

(56) Entgegenhaltungen:
- WO-A1-03/011954
- WO-A1-2010/072551
- CN-A- 101 899 276
- JP-A- 2007 051 195
- US-A1- 2010 255 228

## Beschreibung

Die Erfindung betrifft eine Haftklebmasse auf der Basis von Styrolblockcopolymeren, die sich durch eine erhöhte Temperaturstabilität und eine erhöhte Kohäsion bei gleichzeitig hoher Klebkraft auszeichnet, sowie deren Verwendung.

Als Haftklebemassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen und die Wiederablösbarkeit beruht auf ihren adhäsiven Eigenschaften und auf ihren kohäsiven Eigenschaften. Als Basis für Haftklebemassen kommen verschiedene Verbindungen in Frage.

Klebebänder, die mit Haftklebemassen ausgerüstet sind, so genannte Haftklebebänder, werden heute im industriellen und privaten Bereich in vielfältiger Weise verwendet. Üblicherweise bestehen Haftklebeänder aus einer Trägerfolie, die ein- oder beidseitig mit einer Haftklebmasse ausgerüstet ist. Es gibt auch Haftklebebänder, die ausschließlich aus einer Haftklebmasseschicht und keiner Trägerfolie bestehen, die so genannten Transfer-Tapes. Die Zusammensetzung der Haftklebebänder kann sehr unterschiedlich sein und richtet sich nach den jeweiligen Anforderungen der unterschiedlichen Anwendungen. Die Träger bestehen üblicherweise aus Kunststofffolien wie zum Beispiel Polypropylen, Polyethylen, Polyester oder auch aus Papier, Gewebe oder Vliesstoff.

Die Selbst- beziehungsweise Haftklebemassen basieren zumeist auf Acrylat-Copolymeren, Silikonen, Naturkautschuk, Synthesekautschuk, Styrolblockcopolymeren oder Polyurethanen.

Es besteht ein Bedarf an Klebebändern, die eine sehr hohe Verklebungsfestigkeit aufweisen, aber auch bei erhöhten Temperaturen ihre Kohäsion nicht verlieren. Insbesondere bei Verklebungen im Außenbereich oder in Automobilen können Temperaturen von über 60 °C bis 70 °C auftreten. Für Klebebänder mit besonders hohen Halteleistungen insbesondere im Konsumerbereich werden häufig Klebmassen auf Basis von Styrolblockcopolymeren eingesetzt. Diese haben den Vorteil, dass sie eine sehr hohe Verklebungsfestigkeit aufweisen können bei gleichzeitig sehr hoher Kohäsion. Durch eine hohe Anfassklebrigkeit sind auch Verklebungen auf rauen Untergründen sicher möglich.

Typischerweise finden lineare oder radiale Blockcopolymere auf Basis von Polystyrolblöcken und Polybutadienblöcken und/oder Polyisoprenblöcken Verwendung, also zum Beispiel radiale Styrol-Butadien-(SB)ₙ und/oder lineare Styrol-Butadien-Styrol (SBS)- und/oder lineare Styrol-Isopren-Styrol (SIS)-Blockcopolymere.

Die im Markt befindlichen Produkte mit Haftklebemassen auf Basis von Styrolblockcopolymeren zeigen Schwächen bei der Verklebungsfestigkeit bei Temperaturen oberhalb von 50 °C. Durch ein Erweichen der vornehmlich aus Polystyrol bestehenden Hartphasen (Blockpolystyroldomänen) kommt es insbesondere bei der Verklebung von mittelschweren Gegenständen zum kohäsiven Versagen der Haftklebestreifen.

Ein Versagen der Verklebung tritt besonders bei einer Kippscherbelastung (bei der ein Drehmoment wirksam ist, wie zum Beispiel bei der Verklebung eines Hakens) deutlich stärker auf, als bei einer reinen Scherbelastung.

Aufgabe der Erfindung ist es daher, eine verbesserte Haftklebemasse auf der Basis von Styrolblockcopolymeren insbesondere für Klebebänder zu schaffen, die auch bei erhöhter Temperatur eine gute Verklebungsfestigkeit aufweisen.

Gelöst wird diese Aufgabe durch eine Haftklebemasse, wie sie im Hauptanspruch niedergelegt ist. Gegenstand der Unteransprüche sind vorteilhafte Fortbildungen des Erfindungsgegenstandes. Des Weiteren umfasst die Erfindung die Verwendung dieser Haftklebemasse.

Demgemäß betrifft die Erfindung eine Haftklebemasse und ihre Verwendung bestehend aus einem Gemisch mindestens enthaltend
- ein Vinylaromatenblockcopolymer
- mindestens ein Klebharz
- ein zweites Copolymer auf Basis eines Vinylaromaten und eines ungesättigtes Anhydrids, wobei das Copolymer aus dem Vinylaromaten und dem ungesättigten Anhydrid besteht,
wobei das zweite Copolymer auf Basis eines Vinylaromaten und eines ungesättigtes Anhydrids mit Vernetzern vernetzt wird. In der Literatur sind unterschiedliche Verfahren zur Erhöhung der Temperaturstabilität von Klebmassen auf Basis von Vinylaromaten beschrieben.

Häufig werden sogenannte Endblockverstärker eingesetzt, die mit den Vinylaromatenendblöcken verträglich sind, aber einen höheren Erweichungspunkt als die reinen Endblöcke besitzen. Dadurch wird die Erweichungstemperatur erhöht. Als Endblockverstärker sind hauptsächlich aromatische C₈- und C₉-Harze bekannt, beschrieben wie zum Beispiel in der EP 1 013 733 B1, der WO 00/75247 A1, der EP 2 064 299 B1 oder der WO 08/042645A1. Daneben kommen auch Polyphenylenoxide beziehungsweise Polyphenylenether zum Einsatz, beschrieben zum Beispiel in der WO 00/24840 A1 oder der WO 03/011954 A1.

Nachteil dieser beiden Lösungen ist, dass nur ein geringer Anteil an den Endblockverstärkern eingesetzt werden kann, da häufig schon ab 5 Gew.-% und mit Sicherheit ab 10 Gew.-% Endblockverstärker die Anfassklebrigkeit der Klebmasse deutlich sinkt. Bei höheren Konzentrationen nimmt dann auch die Klebkraft ab. JP 2007-51195 offenbart die Herstellung eines härtbaren Schmelzklebstoffs auf Elastomerbasis durch Zugabe eines Härtungsbeschleunigers.Die Zusammensetzung enthält ein säureanhydrid-modifiziertes Copolymer, ein Epoxidharz, ein nicht-reaktives Blockcopolymer, ein Klebeharz und einen Weichmache

Überraschenderweise wurde nun gefunden, dass Copolymere bestehend aus einem Vinylaromaten und einem ungesättigten Anhydrid hier Abhilfe schaffen. Diese Polymere scheinen ebenfalls mit dem Endblock sehr gut verträglich zu sein, sofern der Vinylaromatenanteil vorzugsweise mindestens 50 mol-%, weiter vorzugsweise mindestens 60 mol-% beträgt. Im Gegensatz zu anderen Endblockverstärkern wird der Tack nicht verringert und auch die Klebkraft erniedrigt sich nicht, selbst wenn das Copolymer zu einem Anteil von 10 Gew.-% zugesetzt wird.

Ein weiterer Vorteil gegenüber den Phenylenoxiden ist die hohe Transparenz dieser Polymere, die es ermöglicht, auch transparente Klebmassen zu generieren.

Durch die vorhandenen Anhydridgruppen ist es außerdem möglich, die Polymere zu vernetzen. Durch diese Vernetzung kann die Temperaturstabilität noch weiter gesteigert werden. Die Vernetzung kann dabei sowohl über eine Chelat-Verbindung als auch über eine Reaktion mit Epoxiden oder Aminen erfolgen. Die Vernetzung mit Epoxiden funktioniert dabei bevorzugt unter Wärmeeinwirkung, während die Amine spontan mit den Anhydriden auch bei Raumtemperatur reagieren.

Als Haftklebemassen finden solche auf Basis von Blockcopolymeren enthaltenden Polymerblöcke gebildet von Vinylaromaten (A-Blöcke) wie zum Beispiel Styrol und von solchen gebildet durch Polymerisation von 1,3-Dienen (B-Blöcke) wie zum Beispiel Butadien und Isopren und/oder von einem Copolymer aus beidem Anwendung. Auch Produkte die zum Teil oder vollständig hydriert sind, können eingesetzt werden. Blockcopolymere von Vinylaromaten und Isobutylen sind ebenfalls erfindungsgemäß nutzbar. Einsetzbar sind auch Blockcopolymere, dessen B-Blöcke aus Copolymeren aus Butadien beziehungsweise Isopren und Styrol bestehen.

Blockcopolymere können lineare A-B-A-Struktur aufweisen. Einsetzbar sind ebenfalls Blockcopolymere von radialer Gestalt sowie sternförmige und lineare Multiblockcopolymere. Als weitere Komponente können A-B-Zweiblockcopolymere eingesetzt werden. Der Anteil an Endblöcken beträgt dabei zwischen 13 Gew.-% bis 40 Gew.-%, bevorzugt 13 Gew.-% bis 33 Gew.-%.

Es können auch Mischungen unterschiedlicher Blockcopolymere zum Einsatz kommen, vorzugsweise Mischungen aus Blockcopolymeren mit linearer A-B-A-Struktur und Zweiblockcopolymeren oder Mischungen aus Multiblockcopolymeren mit radialer oder sternförmiger Gestalt und Zweiblockcopolymeren. Des Weiteren sind auch Mischungen aus Blockcopolymeren mit linearer A-B-A-Struktur, aus Multiblockcopolymeren mit radialer oder sternförmiger Gestalt und Zweiblockcopolymeren bevorzugt.

Typische Einsatzkonzentrationen für die Blockcopolymere liegen im Bereich zwischen 30 Gew.-% und 70 Gew.-%, insbesondere im Bereich zwischen 35 Gew.-% und 55 Gew.-%. Als Vinylaromat kommt dabei bevorzugt Styrol zum Einsatz.

Die Polymere aus Vinylaromaten und ungesättigten Säureanhydriden werden bevorzugt durch radikalische Polymerisation gewonnen. Bei geeigneter Auswahl der Anhydride und Vinylaromaten kommt es zu einem alternierenden Einbau der einzelnen Monomere in die Kette. Der molare Anteil der ungesättigten Säureanhydride ist dabei gemäß einer bevorzugten Ausführungsform maximal so groß wie der Anteil an Vinylaromaten.

Als Vinylaromaten können zum Beispiel eingesetzt werden Styrol, Vinyltoluol, α-Methylstyrol, Chlorstyrol, o-, oder p-Methylstyrol 2,5-Dimethylstyrol, p-Methoxystyrol und p-tert.-Butylstyrol.

Als ungesättigte Anhydride dienen zum Beispiel Maleinsäureanhydrid, Citraconsäureanhydrid, Dimethylmaleinsäureanhydrid, Ethyl- und Diethylmaleinsäureanhydrid, Chlor- und Dichlormaleinsäureanhydrid und Phenylmaleinsäureanhydrid.

Bevorzugt sind dabei Polymere aus Styrol und Maleinsäureanhydrid, häufig als SMA-Polymere bezeichnet. Kommerziell sind solche Polymere zum Beispiel unter dem Namen Xiran von der Firma Polyscope Polymers, unter SMA von Sartomer und unter Dylark von der Firma Nova Chemicals erhältlich. Diese SMA-Polymere sind mit unterschiedlichen Gehalten an Maleinsäure und mit unterschiedlichen Molekulargewichten erhältlich. Bevorzugt sind dabei Molekulargewichte, die im Bereich der Molekulargewichte der Vinylaromatenendblöcken der Blockcopolymere liegen, also im Bereich von 8.000 bis 25.000 g/mol.

Eine mögliche Vernetzung dieser Elastomere kann auf unterschiedliche Weise erfolgen. Zum einen können die Säure- beziehungsweise Säureanhydridgruppen mit Vernetzern reagieren, wie zum Beispiel verschiedenen Aminen oder Epoxidharzen.

Als Amine können dabei primäre und sekundäre Amine aber auch Amide und andere stickstoffhaltige Verbindungen mit einem Wasserstoff direkt am Stickstoff gebunden, zum Einsatz kommen.

Als Epoxidharze werden üblicherweise sowohl monomere als auch oligomere Verbindungen mit mehr als einer Epoxidgruppe pro Molekül verstanden. Dieses können Reaktionsprodukte von Glycidestern oder Epichlorhydrin mit Bisphenol A oder Bisphenol F oder Mischungen aus diesen beiden sein. Einsetzbar sind ebenfalls Epoxidnovolakharze gewonnen durch Reaktion von Epichlorhydrin mit dem Reaktionsprodukt aus Phenolen und Formaldehyd. Auch monomere Verbindungen mit mehreren Epoxidendgruppen, die als Verdünner für Epoxidharze eingesetzt werden, sind verwendbar. Ebenfalls sind elastisch modifizierte Epoxidharze einsetzbar oder epoxidmodifizierte Elastomere wie zum Beispiel epoxidierte Styrolblockcopolymere, zum Beispiel Epofriend der Firma Daicel.

Beispiele von Epoxidharzen sind AralditeTM 6010, CY-281TM, ECNTM 1273, ECNTM 1280, MY 720, RD-2 von Huntsman, DERTM 331, 732, 736, DENTM 432 von Dow Chemicals, EponTM 812, 825, 826, 828, 830 etc. von Shell Chemicals, HPTTM 1071, 1079 ebenfalls von Shell Chemicals, Epikote 862, 1001 etc. von Hexion.

Kommerzielle aliphatische Epoxidharze sind zum Beispiel Vinylcyclohexandioxide wie ERL-4206, 4221, 4201, 4289 oder 0400 von Union Carbide Corp.

Elastifizierte Elastomere sind erhältlich von der Firma CVC Thermoset Specialties unter dem Namen Hypro.

Epoxidverdünner, monomere Verbindungen mit mehreren Epoxidgruppen sind zum Beispiel Polypox R 9, R12, R 15, R 19, R 20 etc. der Firma UCCP.

Üblicherweise wird bei diesen Reaktionen auch ein Beschleuniger eingesetzt. Dieser kann zum Beispiel aus der Gruppe der tertiären Amine oder modifizierten Phosphine wie zum Beispiel Triphenylphosphin kommen.

Während die Reaktion mit den Aminen häufig schon bei Raumtemperatur stattfindet, läuft die Vernetzung mit den Epoxidharzen im Allgemeinen unter erhöhter Temperatur ab.

Als zweite Möglichkeit besteht die Vernetzung über Metallchelate.

Eine Vernetzung von maleinsäureanhydridmodifizierten Blockcopolymeren mit Metallchelaten ist bekannt aus EP 1 311 559 A1, bei der eine Steigerung der Kohäsion der Blockcopolymermischungen beschrieben wird. Nachteil dieser Vernetzung ist die enge Begrenzung auf hydrierte Blockcopolymere, da nur diese mit Maleinsäure modifizierbar sind. Die Verwendung von Copolymeren aus Vinylaromaten und nicht hydrierten Säureanhydriden hat den Vorteil, dass auch nicht hydrierte Blockcopolymere zum Einsatz kommen können.

Die Metalle der Metallchelate können die der 2. 3. 4. und 5. Hauptgruppe und die Übergangsmetalle sein. Besonders geeignet sind zum Beispiel Aluminium, Zinn, Titan, Zirkonium, Hafnium, Vanadium, Niob, Chrom, Mangan, Eisen, Kobalt, und Cer. Besonders bevorzugt sind Aluminium und Titan.

Für die Chelatvernetzung können unterschiedliche Metallchelate zum Einsatz kommen, die durch die folgende Formel wiedergegeben werden können:

(R₁O)ₙM(XR₂Y)ₘ,

wobei
M ein Metall wie oben beschrieben ist;
R₁ eine Alkyl- oder Arylgruppe wie Methyl, Ethyl, Butyl, Isopropyl oder Benzyl ist;
n null oder eine größere ganze Zahl ist;
X und Y Sauerstoff oder Stickstoff sind, die jeweils auch durch eine Doppelbindung an R₂ gebunden sein können;
R₂ eine X und Y verbindende Alkylengruppe ist, die verzweigt sein kann, oder auch Sauerstoff oder weitere Heteroatome in der Kette enthalten kann;
m eine ganze Zahl, mindestens jedoch 1 ist.

Bevorzugte Chelatliganden sind solche, die aus der Reaktion folgender Verbindungen entstanden sind: Triethanolamin, 2,4-Pentandion, 2-Ethyl-1,3-Hexandiol oder Milchsäure. Besonders bevorzugte Vernetzer sind Aluminium- und Titanylacetylacetonate.

Dabei sollte ein annähernd äquivalentes Verhältnis zwischen den Säurebeziehungsweise Säureanhydridgruppen und den Acetylacetonatgruppen gewählt werden, um eine optimale Vernetzung zu erreichen.

Das Verhältnis zwischen Anhydridgruppen und Acetylacetonatgruppen kann aber variiert werden, dabei sollte für eine ausreichende Vernetzung keine der beiden Gruppen in mehr als einem fünffachen molaren Überschuss vorliegen.

In weiter bevorzugter Ausgestaltung weist die Haftklebemasse neben dem mindestens einen Vinylaromatenblockcopolymer mindestens ein Klebharz auf, um die Adhäsion in gewünschter Weise zu erhöhen. Das Klebharz sollte mit dem Elastomerblock der Blockcopolymere verträglich sein.

Geeignete Klebharze sind unter anderem vorzugsweise nicht hydrierte, partiell oder vollständig hydrierte Harze auf Basis von Kolophonium oder Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder C₉-Monomerströmen oder besonders bevorzugt Polyterpenharze auf Basis von α-Pinen und/oder ß-Pinen und/oder δ-Limonen. Vorgenannte Klebharze können sowohl allein als auch im Gemisch eingesetzt werden. Zudem kann die Klebmasseformulierung auch Klebharze enthalten, die bei Raumtemperatur flüssig sind.

Der Klebemasse können übliche Zuschlagstoffe wie Alterungsschutzmittel (, Antioxidantien, Lichtschutzmittel usw.) zugesetzt sein.

Als Additive zur Klebemasse werden typischerweise genutzt:
- Plastifizierungsmittel wie zum Beispiel Weichmacheröle oder niedermolekulare flüssige Polymere wie zum Beispiel niedermolekulare Polybutene
- primäre Antioxidantien wie zum Beispiel sterisch gehinderte Phenole
- sekundäre Antioxidantien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Verarbeitungshilfsmittel
- Netzadditive
- Haftvermittler und/oder
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine, um nur einige wenige zu nennen.

Die Zuschlagstoffe oder Additive sind nicht zwingend, die Klebemasse funktioniert auch, ohne dass diese einzeln oder in beliebiger Kombination zugesetzt sind.

Gemäß einer bevorzugten Ausführungsform der Erfindung weist die Haftklebemasse die folgende Zusammensetzung auf:
- Vinylaromatenblockcopolymer: 30 Gew.-% bis 70 Gew.-%, insbesondere 35 Gew.-% bis 55 Gew.-%
- Klebharz oder Klebharze: 30 Gew.-% bis 70 Gew.-%, insbesondere 45 Gew.-% bis 60 Gew.-%
- ein zweites Copolymer auf Basis eines Vinylaromaten und eines ungesättigtes Anhydrids: 2 Gew.-% bis 15 Gew.-%, insbesondere 5 Gew.-% bis 10 Gew.-%

Die Herstellung und Verarbeitung der Haftklebemassen kann aus Lösung, Dispersion sowie aus der Schmelze erfolgen. Bevorzugte Herstell- und Verarbeitungsverfahren erfolgen aus Lösung sowie aus der Schmelze.

Besonders vorteilhaft lässt sich die erfindungsgemäße Klebemasse in einem ein- oder doppelseitig klebenden Klebeband verwenden. Diese Darreichungsart erlaubt eine besonders einfache und gleichmäßige Applikation der Klebemasse.

Der allgemeine Ausdruck "Klebeband" umfasst dabei ein Trägermaterial, welches ein- oder beidseitig mit einer Haftklebemasse versehen ist. Das Trägermaterial umfasst alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge, Mehrschichtanordnungen und dergleichen. Dabei sind für verschiedene Anwendungen unterschiedlichste Träger wie zum Beispiel Folien, Gewebe, Vliese und Papiere mit den Klebmassen kombinierbar. Des Weiteren umfasst der Ausdruck "Klebeband" auch so genannte "Transferklebebänder", das heißt ein Klebeband ohne Träger. Bei einem Transferklebeband ist die Klebemasse vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, die Klebemasse appliziert und dann der zweite Liner entfernt. Die Klebemasse kann so direkt zur Verbindung zweier Oberflächen verwendet werden.

Das Klebeband kann in festen Längen wie zum Beispiel als Meterware oder aber als Endlosware auf Rollen (archimedische Spirale) zur Verfügung gestellt werden.

Als Trägermaterial eines Klebebandes werden vorliegend bevorzugt Polymerfolien oder Folienverbunde eingesetzt. Derartige Folien/Folienverbunde können aus allen gängigen zur Folienherstellung verwendeten Kunststoffen bestehen, beispielhaft aber nicht einschränkend erwähnt seien:
Polyethylen, Polypropylen - insbesondere das durch mono- oder biaxiale Streckung erzeugte orientierte Polypropylen (OPP), Polyvinylchlorid (PVC), Polyester - insbesondere Polyethylenterephthalat (PET) und Poylethylennaphtalat (PEN), Polyacrylnitril (PAN), Polycarbonat (PC), Polyamid (PA), Polyethersulfon (PES) oder Polyimid (PI).

Zudem können die Folien/Folienverbunde in bevorzugter Ausgestaltung transparent ausgebildet sein, damit auch der Gesamtaufbau eines derartigen Klebeartikels transparent ausgebildet ist. "Transparenz" bedeutet auch hier eine mittlere Transmission im sichtbaren Bereich des Lichts von mindestens 75 %, bevorzugt höher als 90 %.

Weiterhin können auch Träger auf Basis Papier, Gewebe und/oder Vlies eingesetzt werden.

Bei doppelseitig (selbst)klebenden Klebebändern können als obere und untere Schicht erfindungsgemäße Klebemassen gleicher oder verschiedener Art und/oder gleicher oder verschiedener Schichtdicke zur Anwendung kommen. Der Träger kann dabei auf einer oder beiden Seiten dem Stand der Technik entsprechend vorbehandelt sein, so dass beispielsweise eine Verbesserung der Klebemassenverankerung erzielt wird. Ebenso können eine oder beide Seiten mit einer funktionalen Schicht ausgerüstet sein, die beispielsweise als Sperrschicht fungieren kann. Die Haftklebemasseschichten können optional mit Trennpapieren oder Trennfolien eingedeckt werden. Alternativ kann auch nur eine Klebemasseschicht mit einem doppelseitig trennenden Liner eingedeckt sein.

### Herstellung der Haftklebestreifen

Die Bestandteile der Haftklebemassen wurden hierbei in Toluol/Aceton 3:1 (Feststoffgehalt 40 %) gelöst und mit Hilfe eines Streichbalkens auf einer PET-Folie mit einer Dicke von 36 µm ausgestrichen, so dass nach der Trocknung bei 100 °C ein Masseauftrag von 50 g/m² gemessen werden konnte.

### Prüfmethoden

Die Messungen werden, wenn nicht anders angegeben, bei einem Prüfklima von 23 ± 1 °C und 50 ± 5 % rel. Luftfeuchte durchgeführt.

Gemische gemäß folgender Rezepturen zeigten die in Tabelle 2 aufgeführten Klebkräfte, Tackwerte und Scherstandzeitwerte. Dabei wurden die Klebkraft, der SAFT und die Scherstandzeit bei 60 °C an einseitigen Klebebändern bestimmt, bei denen die jeweilige Klebmasse mit einem Masseauftrag von 50 g/m² auf einer PET-Folie der Dicke 36 µm beschichtet worden ist.

### Klebkraft

Die Bestimmung der Klebkraft wird wie folgt durchgeführt: Als definierter Haftgrund wird eine Stahlfläche eingesetzt. Das zu untersuchende verklebbare Flächenelement wird auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den Haftgrund aufgedrückt. Unmittelbar im Anschluss daran wird das verklebbare Flächenelement in einem Winkel von 180° und einer Abzugsgeschwindigkeit von 300 mm/min vom Haftgrund mit einem Zugprüfungsgerät (Firma Zwick) abgezogen und die hierfür benötigte Kraft gemessen. Der Messwert (in N/cm) ergibt sich als Mittelwert aus drei Einzelmessungen.

### SAFT - Shear Adhesive Failure Temperature

Dieser Test dient der Schnellprüfung der Scherfestigkeit von Klebebändern unter Temperaturbelastung.

Zur Messprobenpräparation wird die Klebebandprobe auf eine geschliffene, mit Aceton gereinigte Stahl-Prüfplatte verklebt und anschließend mit einer 2 kg-Stahlrolle und einer Geschwindigkeit von 10 m/min dreimal überrollt. Die Verklebungsfläche der Probe beträgt Höhe x Breite = 13 mm x 10 mm, die Probe wird senkrecht aufgehängt, überragt am oberen Rand die Stahl-Prüfplatte um 2 mm und wird bündig mit einem stabilen Klebestreifen verstärkt, der als Auflage für den Wegmessfühler dient.

Die zu messende Probe wird am unteren Ende mit einem Gewicht von 50 g belastet. Die Stahl-Prüfplatte mit der verklebten Probe wird beginnend bei 25 °C mit einer Rate von 9 °C pro Minute aufgeheizt. Gemessen wird der Rutschweg der Probe mittels Wegmessfühler in Abhängigkeit von Temperatur und Zeit. Es wird die Temperatur gemessen, bei der die Probe einen Rutschweg von 1000 µm zurückgelegt hat. Der Messwert (in °C) ergibt sich als Mittelwert aus zwei Einzelmessungen

### Statischer Schertest

Die Scherfestigkeit ist ein Maß für die innere Festigkeit der Klebmasse und wird im so genannten statischen Schertest folgendermaßen geprüft: Es wird ein 20 x 13 mm Streifen des mit der Klebmasse einseitig mit einem Masseauftrag von 50 g/m² beschichteten Klebebandes auf dem Prüfuntergrund (Stahl; Material nach DIN EN 10088-2, Typ 1, 4301, Oberflächenqualität 2R, kaltgewalzt und blankgeglüht, Rₐ 25 bis 75 nm) aufgeklebt. Der vorbereitete Prüfling wird mit einem Gewicht von 2 kg bei einer Geschwindigkeit von 0,03 m/min viermal überrollt und dann auf Scherung mit einem Gewicht belastet. Als Ergebnis wird die Zeit, die das Klebeband zum Abscheren vom Prüfuntergrund benötigt, in Minuten angegeben. Die in Tabelle 2 aufgeführten Ergebnisse werden bei einer Belastung der Proben von 5 N bei 70 °C erzielt.

### Transparenz

Es wurde die Transparenz der fertigen Produkte nach ASTM-D 1003-61, Methode A gemessen.

### Statische Glasübergangstemperatur T_{g}

Die Bestimmung der statischen Glasübergangstemperatur erfolgt über Dynamische Differenzkalorimetrie nach DIN 53765. Die Angaben zur Glasübergangstemperatur T_{g} beziehen sich auf den Glasumwandlungstemperatur-Wert T_{g} nach DIN 53765:1994-03, sofern im Einzelfall nichts anderes angegeben ist.

### Molekulargewicht

Die Bestimmung des mittleren Molekulargewichtes M_{w} erfolgt mittels Gelpermeationschromatographie (GPC). Als Eluent wird THF mit 0,1 Vol.-% Trifluoressigsäure eingesetzt. Die Messung erfolgt bei 25 °C. Als Vorsäule wird PSS-SDV, 5 µm, 10³ Å, ID 8,0 mm x 50 mm verwendet. Zur Auftrennung werden die Säulen PSS-SDV, 5 µm, 10³ Å, 10⁵ Å und 10⁶ Å mit jeweils ID 8,0 mm × 300 mm eingesetzt. Die Probenkonzentration beträgt 4 g/l, die Durchflussmenge 1,0 ml pro Minute. Es wird gegen PMMA-Standards gemessen.

### Beispiele:

Im Folgenden wird die Erfindung durch einige Beispiele näher erläutert, ohne die Erfindung damit einschränken zu wollen.

Allen Beispielen wurden als Alterungsschutzmittel 0,5 Teile Irganox 1010 und 0,5 Teile Tinuvin P als UV-Absorber zugesetzt.

Zusammensetzung der Beispiele in Gewichtsanteilen siehe Tabelle 1.

**Tabelle1:**

| | C1 | C2 | 3 | C4 | C5 | 6 | 7 | C8 | 9 | C10 | 11 |
|---|---|---|---|---|---|---|---|---|---|---|---|
| Kraton D 1161 | 45 | 42,5 | 42,5 | | | | | | | | |
| Kraton D 1102 | | | | 45 | 42,5 | 42,5 | 42,5 | 40 | 40 | | |
| Kraton G 1657 | | | | | | | | | | 45 | 42,5 |
| Escorez 1310 | 50 | 47,5 | 47,5 | 50 | 47,5 | 47,5 | 47,5 | 45 | 45 | | |
| Escorez 2203 | | | | | | | | | | | |
| Regalite R 1090 | | | | | | | | | | 45 | 42,5 |
| Shellflex 371 | 5 | 5 | 5 | 5 | 5 | 5 | 5 | 5 | 5 | 10 | 10 |
| Kristalex 1120 | | 5 | | | 5 | | | 10 | | | |
| Xiran SZ25010 | | | 5 | | | 5 | 5 | | 10 | | 5 |
| Aluminiumacetylaceton at | | | 0,75 | | | 0,75 | | | 1,5 | | 0,75 |
| Diethylentriamin | | | | | | | 0,25 | | | | |

Eigenschaften der eingesetzten Rohstoffe:
- Kraton D 1161: SIS, ca. 18 Gew.-% Zweiblock, Blockpolystyrolgehalt: 15 Gew.-%, Kraton Polymers
- Kraton D 1102: SBS, ca. 17 Gew.-% Zweiblock, Blockpolystyrolgehalt: 29 Gew.-%, Kraton Polymers
- Kraton G 1657: SEBS, ca. 29 Gew.-% Zweiblock, Blockpolystyrolgehalt: 13 Gew.-%, Kraton Polymers
- Escorez 1310: Kohlenwasserstoffharz, Erweichungspunkt (Ring & Ball) ca. 95 °C, Exxon Mobil
- Regalite R 1090: hydriertes Kohlenwasserstoffharz, Erweichungspunkt (Ring & Ball) ca. 90 °C, Eastman
- Shellflex 371: naphthenisches Öl, T_{g} = -64 °C, Shell
- Kristalex 1120: Aromatenharz auf Basis Styrol/Alphamethylstyrol, Erweichungspunkt (Ring & Ball) ca. 120 °C, Eastman
- Xyran SZ25010: Copolymer aus Styrol und Maleinsäureanhydrid mit einem MSA-Gehalt von 25 Gew.-% und einem Molekulargewicht M_{w} von 10.000 g/mol, Polyscope
- Irganox 1010: sterisch gehindertes Phenol; Ciba Additive
- Tinuvin P: UV-Absorber, Ciba Additive

Die Ring- und Ball-Methode ist die übliche Methode zur Feststellung der Erweichungspunkte. Einzelheiten können der ASTM E 28 und der DIN EN 1238 entnommen werden, auf die hiermit ausdrücklich Bezug genommen wird.

Bei den beispielhaften Haftklebestreifen wurden die folgenden klebtechnischen Daten ermittelt:

| Haftklebemasse Beispiel Nr. | Klebkraft Stahl in N/cm | SAFT in °C | Scherstandzeit bei 60 °C in min |
|---|---|---|---|
| C1 | 10,4 | 105 | 110 |
| C2 | 9,6 | 121 | 205 |
| 3 | 10,2 | 133 | 380 |
| C4 | 13,2 | 128 | 1525 |
| C5 | 11,8 | 140 | 2140 |
| 6 | 12,9 | 148 | 3405 |
| 7 | 12,4 | 154 | 3170 |
| C8 | 9,6 | 148 | 3340 |
| 9 | 12,2 | 163 | 4215 |
| C10 | 6,3 | 97 | 65 |
| 11 | 6,6 | 121 | 1050 |

Wie aus den Beispielen zu erkennen ist, kann durch die Zugabe der Styrolmaleinsäureanhydrid-Copolymere und deren Vernetzung über Komplexbindungen oder über zum Beispiel Amine die Temperaturstabilität der Klebmassen deutlich gesteigert werden. Gleichzeitig ist bis zu einer Menge von 5 Gew.-% kaum eine Verringerung der Klebkraft erkennbar. Bei dem Beispiel 7 konnte allerdings das Amin erst kurz vor der Beschichtung zugegeben werden, um eine vorzeitige Vernetzung zu verhindern. Um die vorzeitige Vergelung bei den Metallchelaten zu verhindern, wurde in den Beispielen Pentandion zugesetzt, das bevorzugt Komplexe mit den Metallchelaten bildet und dadurch eine Vergelung verhindert.

## Patentansprüche

1. Haftklebemasse, mindestens enthaltend
• ein Vinylaromatenblockcopolymer
• mindestens ein Klebharz
• ein zweites Copolymer auf Basis eines Vinylaromaten und eines ungesättigtes Anhydrids, wobei das Copolymer aus dem Vinylaromaten und dem ungesättigten Anhydrid besteht,
wobei das zweite Copolymer auf Basis eines Vinylaromaten und eines ungesättigtes Anhydrids mit Vernetzern vernetzt wird.

2. Haftklebemasse nach Anspruch 1,
**dadurch gekennzeichnet, dass**
der Vinylaromatenanteil des zweiten Copolymers mindestens 50 mol-% beträgt.

3. Haftklebemasse nach Anspruch 1,
**dadurch gekennzeichnet, dass**
das Vinylaromatenblockcopolymer gebildet wird von Polymerblöcken aus Vinylaromaten (A-Blöcke) und aus solchen gebildet durch Polymerisation von 1,3-Dienen (B-Blöcke).

4. Haftklebemasse nach Anspruch 3,
**dadurch gekennzeichnet, dass**
das Vinylaromatenblockcopolymer gebildet wird
(i) von Polymerblöcken aus Styrol,
(ii) und aus solchen gebildet durch Polymerisation von Butadien und Isopren und/oder aus einem Copolymer aus beidem.

5. Haftklebemasse nach Anspruch 1,
**dadurch gekennzeichnet, dass**
das Vinylaromatenblockcopolymer aus Vinylaromaten und Isobutylen gebildet wird.

6. Haftklebemasse nach zumindest einem der Ansprüche 1 bis 5,
**dadurch gekennzeichnet, dass**
die Blockcopolymere eine lineare A-B-A-Struktur oder eine radiale Gestalt aufweisen.

7. Haftklebemasse nach zumindest einem der vorherigen Ansprüche,
**dadurch gekennzeichnet, dass**
es sich bei den Blockcopolymeren um sternförmige oder lineare Multiblockcopolymere handelt.

8. Haftklebemasse nach zumindest einem der vorherigen Ansprüche,
**dadurch gekennzeichnet, dass**
es sich bei den Blockcopolymeren um A-B-Zweiblockcopolymere handelt.

9. Haftklebemasse nach Anspruch 8,
**dadurch gekennzeichnet, dass** in den A-B-Zweiblockcopolymeren der Anteil an Endblöcken zwischen 13 Gew.-% bis 40 Gew.-% beträgt.

10. Haftklebemasse nach zumindest einem der vorherigen Ansprüche,
**dadurch gekennzeichnet, dass**
Mischungen aus Blockcopolymeren mit linearer A-B-A-Struktur und Zweiblockcopolymeren oder Mischungen aus Multiblockcopolymeren mit radialer oder sternförmiger Gestalt und Zweiblockcopolymeren oder Mischungen aus Blockcopolymeren mit linearer A-B-A-Struktur, aus Multiblockcopolymeren mit radialer oder sternförmiger Gestalt und Zweiblockcopolymeren verwendet werden.

11. Haftklebemasse nach zumindest einem der vorherigen Ansprüche,
**dadurch gekennzeichnet, dass** im zweiten Copolymer
als Vinylaromaten eingesetzt werden Styrol, Vinyltoluol, α-Methylstyrol, Chlorstyrol, o-, oder p-Methylstyrol 2,5-Dimethylstyrol, p-Methoxystyrol und/oder p-tert.-Butylstyrol.

12. Haftklebemasse nach zumindest einem der vorherigen Ansprüche,
**dadurch gekennzeichnet, dass** im zweiten Copolymer
als ungesättigte Anhydride eingesetzt werden Maleinsäureanhydrid, Citraconsäureanhydrid, Dimethylmaleinsäureanhydrid, Ethyl- und/oder Diethylmaleinsäureanhydrid, Chlor- und/oder Dichlormaleinsäureanhydrid und/oder Phenylmaleinsäureanhydrid.

13. Haftklebemasse nach zumindest einem der vorherigen Ansprüche,
**dadurch gekennzeichnet, dass**
das zweite Copolymer aus Styrol und Maleinsäureanhydrid besteht.

14. Haftklebemasse nach Anspruch 13,
**dadurch gekennzeichnet, dass**
das zweite Copolymer ein Molekulargewicht von 8.000 bis 25.000 g/mol aufweist.

15. Haftklebemasse nach zumindest einem der vorherigen Ansprüche,
**dadurch gekennzeichnet, dass**
der molare Anteil der ungesättigten Säureanhydride maximal so groß ist wie der Anteil an Vinylaromaten.

16. Haftklebemasse nach zumindest einem der vorherigen Ansprüche,
**dadurch gekennzeichnet, dass**
das zweite Copolymer auf Basis eines Vinylaromaten und eines ungesättigtes Anhydrids mit Aminen oder Epoxidharzen vernetzt wird.

17. Haftklebemasse nach zumindest einem der vorherigen Ansprüche,
**dadurch gekennzeichnet, dass**
das zweite Copolymer auf Basis eines Vinylaromaten und eines ungesättigtes Anhydrids über Metallchelate vernetzt wird, wobei es sich bei dem Metallchelat vorzugsweise um ein Metallchelat der folgenden Formel handelt:
(R₁O)ₙM(XR₂Y)ₘ,
wobei
M ein Metall der 2., 3., 4. oder 5. Hauptgruppe oder ein Übergangsmetall ist,
R₁ eine Alkyl- oder Arylgruppe wie Methyl, Ethyl, Butyl, Isopropyl oder Benzyl ist,
n null oder eine größere ganze Zahl ist,
X, Y Sauerstoff oder Stickstoff sind, die jeweils auch durch eine Doppelbindung an R₂ gebunden sein können;
R₂ eine X und Y verbindende Alkylengruppe ist, die verzweigt sein kann, oder auch Sauerstoff oder weitere Heteroatome in der Kette enthalten kann;
m eine ganze Zahl, mindestens jedoch 1 ist.

18. Haftklebemasse nach zumindest einem der vorherigen Ansprüche,
**dadurch gekennzeichnet, dass**
als Klebharze nicht hydrierte, partiell oder vollständig hydrierte Harze auf Basis von Kolophonium oder Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder C₉-Monomerströmen oder bevorzugt Polyterpenharze auf Basis von α-Pinen und/oder ß-Pinen und/oder δ-Limonen eingesetzt werden.

19. Verwendung einer Haftklebemasse nach zumindest einem der vorherigen Ansprüche in einem ein- oder beidseitig klebenden Klebeband.

## Claims

1. Pressure-sensitive adhesive at least comprising
• a vinylaromatic block copolymer
• at least one tackifier resin
• a second copolymer, based on a vinylaromatic and an unsaturated anhydride, the copolymer consisting of the vinylaromatic and the unsaturated anhydride, the second copolymer, based on a vinylaromatic and an unsaturated anhydride, being crosslinked with crosslinkers.

2. Pressure-sensitive adhesive according to Claim 1,
**characterized in that**
the vinylaromatic fraction of the second copolymer is at least 50 mol%.

3. Pressure-sensitive adhesive according to Claim 1,
**characterized in that**
the vinylaromatic block copolymer is formed from polymer blocks of vinylaromatics (A blocks) and of blocks formed by polymerization of 1,3-dienes (B blocks).

4. Pressure-sensitive adhesive according to Claim 3,
**characterized in that**
the vinylaromatic block copolymer is formed
(i) from polymer blocks of styrene,
(ii) and of those formed by polymerization of butadiene and isoprene, and/or of a copolymer of both.

5. Pressure-sensitive adhesive according to Claim 1,
**characterized in that**
the vinylaromatic block copolymer is formed from vinylaromatics and isobutylene.

6. Pressure-sensitive adhesive according to at least one of Claims 1 to 5,
**characterized in that**
the block copolymers have a linear A-B-A structure or a radial architecture.

7. Pressure-sensitive adhesive according to at least one of the preceding claims,
**characterized in that**
the block copolymers are star-shaped or linear multiblock copolymers.

8. Pressure-sensitive adhesive according to at least one of the preceding claims,
**characterized in that**
the block copolymers are A-B diblock copolymers.

9. Pressure-sensitive adhesive according to Claim 8,
**characterized in that** in the A-B diblock copolymers the fraction of end blocks is between 13 wt% to 40 wt%.

10. Pressure-sensitive adhesive according to at least one of the preceding claims,
**characterized in that**
mixtures of block copolymers with linear A-B-A structure and diblock copolymers, or mixtures of multiblock copolymers with radial or star-shaped architecture and diblock copolymers, or mixtures of block copolymers with linear A-B-A structure, of multiblock copolymers with radial or star-shaped architecture and of diblock copolymers are used.

11. Pressure-sensitive adhesive according to at least one of the preceding claims,
**characterized in that** in the second copolymer vinylaromatics used are styrene, vinyltoluene, α-methylstyrene, chlorostyrene, o- or p-methylstyrene, 2,5-dimethylstyrene, p-methoxystyrene and/or p-tert-butylstyrene.

12. Pressure-sensitive adhesive according to at least one of the preceding claims,
**characterized in that** in the second copolymer unsaturated anhydrides used are maleic anhydride, citraconic anhydride, dimethylmaleic anhydride, ethyl- and/or diethylmaleic anhydride, chloro- and/or dichloromaleic anhydride and/or phenylmaleic anhydride.

13. Pressure-sensitive adhesive according to at least one of the preceding claims,
**characterized in that**
the second copolymer consists of styrene and maleic anhydride.

14. Pressure-sensitive adhesive according to Claim 13,
**characterized in that**
the second copolymer has a molecular weight of 8000 to 25 000 g/mol.

15. Pressure-sensitive adhesive according to at least one of the preceding claims,
**characterized in that**
the molar fraction of the unsaturated acid anhydrides is at most the same as the fraction of vinylaromatics.

16. Pressure-sensitive adhesive according to at least one of the preceding claims,
**characterized in that**
the second copolymer, based on a vinylaromatic and an unsaturated anhydride, is crosslinked with amines or epoxy resins.

17. Pressure-sensitive adhesive according to at least one of the preceding claims,
**characterized in that**
the second copolymer, based on a vinylaromatic and an unsaturated anhydride, is crosslinked via metal chelates, with the metal chelate comprising preferably a metal chelate of the following formula:
(R₁O)ₙM(XR₂Y)ₘ,
where
M is a metal from main group 2, 3, 4 or 5, or a transition metal,
R₁ is an alkyl or aryl group such as methyl, ethyl, butyl, isopropyl or benzyl,
n is zero or a larger integer,
X, Y are oxygen or nitrogen, and may each also be bonded to R₂ through a double bond;
R₂ is an alkylene group which joins X and Y and may be branched, or else may include oxygen or other heteroatoms in the chain;
m is an integer, but is at least 1.

18. Pressure-sensitive adhesive according to at least one of the preceding claims,
**characterized in that**
tackifier resins used are unhydrogenated, partially hydrogenated or fully hydrogenated resins based on rosin or rosin derivatives, hydrogenated polymers of dicyclopentadiene, unhydrogenated, partially hydrogenated, selectively hydrogenated or fully hydrogenated hydrocarbon resins based on C₅, C₅/C₉ or C₉ monomer streams, or, preferably, polyterpene resins based on α-pinene and/or β-pinene and/or δ-limonene.

19. Use of a pressure-sensitive adhesive according to at least one of the preceding claims in a single-sided or double-sided adhesive tape.

## Revendications

1. Matière autoadhésive, contenant au moins
• un copolymère séquencé de composés vinylaromatiques
• au moins une résine adhésive
• un deuxième copolymère à base d'un composé vinylaromatique et d'un anhydride insaturé, le copolymère étant constitué du composé vinylaromatique et de l'anhydride insaturé,
le deuxième copolymère à base d'un composé vinylaromatique et d'un anhydride insaturé étant réticulé avec des agents de réticulation.

2. Matière autoadhésive selon la revendication 1,
**caractérisée en ce que**
la proportion du composé vinylaromatique du deuxième copolymère est d'au moins 50 % en moles.

3. Matière autoadhésive selon la revendication 1,
**caractérisée en ce que**
le copolymère séquencé de composés vinylaromatiques est constitué de séquences polymères à base de composés vinylaromatiques (séquences A) et de celles formées par polymérisation de 1,3-diènes (séquences B).

4. Matière autoadhésive selon la revendication 3,
**caractérisée en ce que**
le copolymère séquencé de composés vinylaromatiques est constitué
(i) de séquences polymères à base de styrène,
(ii) et de celles formées par polymérisation de butadiène et d'isoprène et/ou d'un copolymère des deux.

5. Matière autoadhésive selon la revendication 1,
**caractérisée en ce que**
le copolymère séquencé de composés vinylaromatiques est constitué de composés vinylaromatiques et d'isobutylène.

6. Matière autoadhésive selon au moins l'une quelconque des revendications 1 à 5,
**caractérisée en ce que**
les copolymères séquencés présentent une structure A-B-A linéaire ou une configuration radiale.

7. Matière autoadhésive selon au moins l'une quelconque des revendications précédentes,
**caractérisée en ce que**
pour ce qui est des copolymères séquencés, il s'agit de copolymères multiséquencés linéaires ou en étoile.

8. Matière autoadhésive selon au moins l'une quelconque des revendications précédentes,
**caractérisée en ce que**
pour ce qui est des copolymères séquencés, il s'agit de copolymères biséquencés A-B.

9. Matière autoadhésive selon la revendication 8,
**caractérisée en ce que** dans les copolymères biséquencés A-B la proportion des séquences terminales est comprise entre 13 % en poids et 40 % en poids.

10. Matière autoadhésive selon au moins l'une quelconque des revendications précédentes,
**caractérisée en ce**
**qu'**on utilise des mélanges de copolymères séquencés à structure linéaire A-B-A et de copolymères biséquencés ou des mélanges de copolymères multiséquencés à configuration radiale ou en étoile et de copolymères biséquencés ou des mélanges de copolymères séquencés à structure linéaire A-B-A, de copolymères multiséquencés à configuration radiale ou en étoile et de copolymères biséquencés.

11. Matière autoadhésive selon au moins l'une quelconque des revendications précédentes,
**caractérisée en ce que** dans le deuxième copolymère on utilise comme composés vinylaromatiques le styrène, le vinyltoluène, l'α-méthylstyrène, le chlorostyrène, l'o-méthylstyrène ou le p-méthylstyrène, le 2,5-diméthylstyrène, le p-méthoxystyrène et/ou le p-tert-butylstyrène.

12. Matière autoadhésive selon au moins l'une quelconque des revendications précédentes,
**caractérisée en ce que** dans le deuxième copolymère on utilise comme anhydrides insaturés l'anhydride maléique, l'anhydride citraconique, l'anhydride diméthylmaléique, l'anhydride éthylmaléique et/ou l'anhydride diéthylmaléique, l'anhydride chloromaléique et/ou l'anhydride dichloromaléique et/ou l'anhydride phénylmaléique.

13. Matière autoadhésive selon au moins l'une quelconque des revendications précédentes,
**caractérisée en ce que**
le deuxième copolymère est constitué de styrène et anhydride maléique.

14. Matière autoadhésive selon la revendication 13,
**caractérisée en ce que**
le deuxième copolymère présente une masse moléculaire de 8 000 à 25 000 g/mole.

15. Matière autoadhésive selon au moins l'une quelconque des revendications précédentes,
**caractérisée en ce que**
la proportion molaire des anhydrides d'acides insaturés est au maximum aussi élevée que la proportion des composés vinylaromatiques.

16. Matière autoadhésive selon au moins l'une quelconque des revendications précédentes,
**caractérisée en ce que**
le deuxième copolymère à base d'un composé vinylaromatique et d'un anhydride insaturé est réticulé avec des amines ou des résines époxy.

17. Matière autoadhésive selon au moins l'une quelconque des revendications précédentes,
**caractérisée en ce que**
le deuxième copolymère à base d'un composé vinylaromatique et d'un anhydride insaturé est réticulé par des chélates métalliques, le chélate métallique consistant de préférence en un chélate métallique de formule suivante :
(R₁O)ₙM(XR₂Y)ₘ,
dans laquelle
M est un métal du groupe 2A, 3A, 4A ou 5A ou un métal de transition,
R₁ est un groupe alkyle ou aryle, tel que méthyle, éthyle, butyle, isopropyle ou benzyle,
n est zéro ou un nombre entier plus grand,
X, Y représentent des atomes d'oxygène ou d'azote, qui peuvent également être liés chacun à R₂ par une double liaison ;
R₂ est un groupe alkylène reliant X et Y, qui peut être ramifié, ou peut également contenir un atome d'oxygène ou d'autres hétéroatomes dans la chaîne ;
m est un nombre entier, mais au moins égal à 1.

18. Matière autoadhésive selon au moins l'une quelconque des revendications précédentes,
**caractérisée en ce**
**qu'**on utilise comme résines adhésives des résines non hydrogénées, partiellement ou totalement hydrogénées, à base de colophane ou de dérivés de colophane, des polymérisats hydrogénés du dicyclopentadiène, des résines hydrocarbonées non hydrogénées, partiellement, sélectivement ou totalement hydrogénées, à base de courants de monomères en C₅, C₅/C₉ ou C₉, ou de préférence des résines polyterpéniques à base d'α-pinène et/ou de β-pinène et/ou de δ-limonène.

19. Utilisation d'une matière autoadhésive selon au moins l'une quelconque des revendications précédentes dans un ruban adhésif collant sur une face ou sur les deux.
